# EUROPEAN PATENT SPECIFICATION

(11) **EP 0 976 297 B1**
(45) Date of publication and mention of the grant of the patent: **02.07.2003**
(21) Application number: 98918218.3
(22) Date of filing: 14.04.1998
(51) Int. Cl.: H04Q 11/04

(54) **NETWORK INTERFACE WITH ADAPTIVE BRIDGE FOR EFFICIENT MAPPING OF ETHERNET PACKETS OVER AN ATM-BASED BROADBAND ACCESS NETWORK**
NETZÜBERGANGSEINRICHTUNG MIT EINER ADAPTIVEN BRÜCKE ZUR EFFIZIENTEN ABBILDUNG VON ETHERNET PAKETEN ÜBER EINEM ATM-BASIERTEN BREITBAND ZUGANGSNETZ
INTERFACE RESEAU AVEC UN PONT ADAPTATIF POUR UNE CORRESPONDANCE EFFICACE DE PAQUETS ETHERNET VERS UN RESEAU D'ACCES LARGE BANDE BASE SUR LE MODE DE TRANSFERT ASYNCHRONE

(30) Priority: 17.04.1997 US 840890
(43) Date of publication of application: 02.02.2000
(73) Proprietor: Ericsson, Inc., Richardson, TX 75081 (US)
(72) Inventor: LIU, Tzu-Chun, Sunnyvale, CA 94086 (US); STROLLO, Sebastian, S-116 22 Stockholm (SE); AHMED, Zaheer, San Jose, CA 95131 (US); KEVERN, Brad, Scottsdale, AZ 85258-9117 (US)
(74) Representative: HOFFMANN - EITLE
(86) International application number: US9807540
(87) International publication number: WO98047310

(56) References cited:
- WO-A-91/08627
- US-A- 5 060 228
- US-A- 5 136 580
- US-A- 5 229 994

## Description

### Field of the Invention

The present invention pertains to the field of data communication networks and, more particularly, to methods and apparatus for implementing adaptive bridge functionality in a network interface device for providing efficient mapping of one or more local ethernet networks over an ATM-based broadband access network.

### Background of the Invention

It has become increasingly desirable to reduce the (overall) required transmission and distribution facilities for providing multiple communication services for residential and business subscribers. For example, in addition to traditional telecommunication and CATV services, it is desirable to further combine the two-way transport of multiple "broadband" digital services over a single, economic distribution network, such as, e.g., a fiber, coaxial, or combined fiber-coaxial distribution network. Further, with the explosion of recent interest in services associated with the "Internet," demand for low cost, high speed two-way digital data transport is at an all time high.

There has been significant development of asynchronous transfer mode ("ATM") networks, which are particularly well-suited for supporting multiple digital data services delivered over a single distribution network. With ATM transmission, data packets, or "cells" containing information relating to one or more subscriber services are periodically assembled and transmitted from a sending node and received and disassembled at a receiving node, wherein bandwidth utilization is optimized as a function of the statistical service activity. By way of specific examples of ATM-based broadband access networks, a preferred system architecture and data transmission protocol for an ATM-based point-to-multipoint optical network is disclosed and described in U.S. Patent Application Serial No. 08/826,633, filed April 3, 1997, entitled "Data Transmission Over a Point-to-Multipoint Optical Network." Likewise, a preferred system architecture and data transmission protocol for an ATM-based a point-to-multipoint broadband access network employing a shared coaxial medium is disclosed and described in U.S. Patent Application Serial No. 08/772,088, filed December 19, 1996, entitled "Network Architecture for Broadband Data Communication Over a Shared Medium."

In order to support such a wide variety of communication signal protocols and service types transmitted over a single subscriber access line, it is necessary to also provide a multi-functional network interface at each respective subscriber premise location, i.e., residence or business. In particular, the network interface must be able to perform the requisite transmission, reception, provisioning (i.e., service parsing and routing) and maintenance needed to achieve a service-independent, transparent gateway between an ATM-based broadband access network and the respective subscriber communication devices. Further, ethernets connecting two or more devices in a respective business or residence will often carry a significant amount of traffic that is only intended for local use. Thus, the transparent upstream transmission of data packets from this network can be costly in terms of both bandwidth utilization and message security, not to mention the increased cost of the unnecessary transport of the packets throughout the upstream network. As such, it would be desirable to add MAC level bridging functionality to the afore-described subscriber network interface.

In particular, a "bridge" is used to interconnect two or more separate local area network segments (e.g., ethernets). Bridges typically operate by mapping the MAC addresses of the respective end stations residing on each network segment connected to the bridge and allowing only the necessary traffic to pass through to the other segment(s). For example, when a packet is received by the bridge from a network segment, the bridge evaluates the respective destination and source address segments of the packet and, if the segments are the same, the packet is dropped, or "filtered." If the source and destination address segments are different, then the packet is forwarded to the appropriate segment(s).

Additionally, bridges may be configured to prevent bad or misaligned packets from spreading between segments by not forwarding them. A more detailed description of LAN bridges and routers is provided in "Interconnections: Bridges and Routers," by Radia Perlman, (1992, Addison-Wesley).

Further reference is made to the various LAN bridging standards promulgated by the IEEE 802.1 committee, and, in particular, the 802.1d standard, which was first published in March, 1991.

"Learning bridges" make more selective routing decisions by building an internal MAC address table for each connected segment based on the source addresses of respective messages received by the bridge. More recently, multi-port routers and hubs (or LAN switches) have been developed to perform more complex network traffic management functions, such as routing packets between different or multiple LAN types, or based on multiple "virtual" LAN designations. A basic property of learning bridges is that some type of "spanning algorithm" must be employed to prevent never-ending loop backs of data between different bridges; (hence the term "tree," which has no loops). A detailed description of the spanning tree algorithm approach is set forth in the Perlman text.

However, the spanning tree algorithm is complex to implement, can impose significant (i.e., expensive) memory and processor requirements, and does not necessarily provide for good security. As a result, the conventional spanning tree approach is not well-suited for the afore-described network interface application.

U.S. Patent No. 5,060,228 ("'228 patent") discusses a bridge communication system for supporting a relatively large bridge system without increasing the load on the backbone network. It is concerned with using a learning table so that respective nodes of the bridge system may correctly forward packets of data within the system, without requiring the addition of functionality to the backbone network. However, because it is not concerned with filtering message traffic within the system, the '228 patent teaches storing the addresses for *all* of the end nodes of the entire system on each bridge apparatus, thereby substantially increasing the memory requirements for each bridge apparatus to support system functionality.

U.S. Patent No. 5,136,580 ("'580 patent") discloses an apparatus and method that allows two or more separate LANs to be connected, or "bridged", so that traffic between the LANs is restricted to those destinations which are on remote LANs. However, the apparatus and method disclosed in the '580 patent teach storing the full address of each end node in each bridge within the system for filter processing, again increasing the memory and search processing requirements for supporting functionality within the system.

PCT Patent Application WO 91/08627 ("'627 publication") discloses a filtering bridge for selectively forwarding messages between multiple local networks within a wide area network so that messages destined for a local network associated with the bridge are not forwarded, while messages destined for a remote network are forwarded. In particular, a packet filter stores a table memory containing respective 64 bit entries associated with each network node, the first 48 bits representing the respective node address and the last sixteen bits representing a link number identifying a LAN on which the node resides. To expedite searching, the table entries are stored in linked lists referred to as buckets. To find a respective address in the stored in the table, the first ten bits of the address to be found are used to locate the appropriate bucket in which the address is held. Then, all forty eight bits of the address are compared, sixteen bits at a time, with the entries in the respective bucket to see if there is a match.

While this approach is more efficient than in the previously cited patents, i.e., in that each bucket has far fewer entries than the entire table memory, it still requires that the entire address of each node be stored in a linked list and that the entire address of each received message being compared with the stored address entries for making a forward-or-filter decision, requiring corresponding memory and processor resources.

Thus, it would be desirable to provide a further improved bridging device, which can provide strict message filtering and security with still lower memory and processor requirements.

### Summary of the Invention

The present invention provides an improved network interface for mapping local ethernet traffic onto an ATM-based broadband access network, wherein the interface includes an adaptive MAC-level bridge that employs a fast algorithm for filtering outgoing packets destined only for local devices on the same ethernet segment.

In a preferred embodiment, respective subscriber residences and business locations are each equipped with a network interface that provides access to an ATM-based broadband access network. In particular, the network interface includes an ethernet service module that connects one or more MAC devices in the respective residence or business location (e.g., personal computers, printers, fax machines, etc.) as a respective local area network segment.

In accordance with a general aspect of the invention, the ethernet service module reads every outgoing packet received on the respective ethernet segment, first checking the ethernet CRC data then, if the packet data is not corrupted or otherwise misaligned, using the last byte of the MAC destination address of the packet header to index a hash table of a linked list containing the first five bytes of the stored MAC addresses of devices located on the ethernet segment. If the destination address exists in the linked list, the ethernet packet is dropped, since it belongs to the subscriber LAN segment and is not meant for further upstream transmission.

In particular, since only the last byte of the destination address is used for hashing, a relatively small hash table of two-hundred fifty-five entries can be used to index into the remaining five bytes of the respective stored MAC addresses, wherein a linked list keeps track of collisions on the hash value (i.e., whereby a separate "linked" entry is created for each MAC address having the same common last byte.

In accordance with a further aspect of the invention, regardless of whether the destination address is a match with a stored address, the ethernet service module also checks the source address of the outgoing respective packets by using the same algorithm. In particular, if an address does not already exist in the linked list, it is added. In this manner, the ethernet service module keeps growing its internal database corresponding to the presence and activities of devices on the subscriber ethernet segment.

In accordance with a still further aspect of the invention, a variable timer is employed to track of the "shelf life" of stored MAC addresses, and to ensure that only recently active addresses are stored. In a preferred embodiment, a timer tick is set at a regular interval for traversing the linked list, decrementing the remaining time each of the respective stored MAC addresses has left and, at the same time, deleting those addresses whose life time has expired. Conversely, each time a stored MAC address shows up in the source address field, its "shelf life" allotment is fully reset to a new maximum value.

In accordance with a still further aspect of the invention, the network interface can also be implemented as a protocol interface, in addition to a packet filter. To this end, in a preferred embodiment, ethernet packets that are to be forwarded over the ATM-based network are given respective LLC and AAL-5 layer headers (and new CRC data) for upstream ATM cell transport.

Other and further objects, features, aspects, and advantages of the present invention will become better understood with the following detailed description of the accompanying drawings.

### Brief Description of the Drawings

The drawings illustrate both the design and utility of preferred embodiments of the present invention, in which:
FIG. **1** is a functional diagram of an exemplary ATM-based broadband access network that maps a plurality of subscriber residences and business locations over a wide area network ("WAN");
FIG. **2** illustrates a preferred filtering process of outgoing packets from a respective subscriber ethernet LAN segment in the network of FIG. **1**;
FIG. **3** illustrates a preferred process for updating a linked list of stored MAC addresses used in the filtering process illustrated FIG. **2**; and
FIG. **4** illustrates a preferred protocol adaptation process for converting ethernet packets to be forwarded over the broadband access network of FIG. **1** into ATM cell format.

### Detailed Description of the Preferred Embodiments

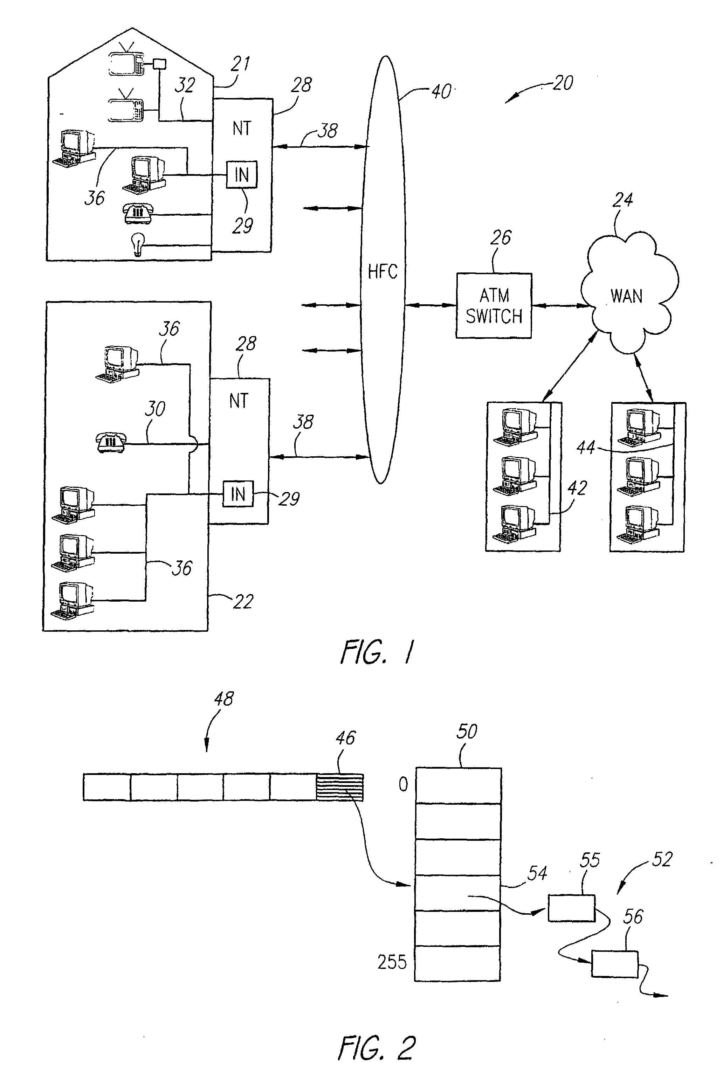

Referring to FIG. **1**, an exemplary ATM-based broadband access network 20 includes an ATM compatible switch 26, which transmits and receives multi-service type ATM cells to and from a plurality subscriber residences 21 and business locations 22, respectively. The ATM switch 26 also transmits and receives ATM cells over a wide area network ("WAN") 24, such as, e.g., a public switched telephone network, a private point-to-point or point-to-multipoint network, or some combination thereof.

In accordance with a first aspect of the invention, the respective subscriber residences 21 and business locations 22 are each equipped with a network interface facility ("NT") 28. In particular, the NT 28 supports the two-way transport of multiple communication services via RF carrier modulated ATM cells that are transmitted between the switch 26 and respective NT 28 over a hybrid-fiber-coaxial ("HFC") distribution network 40, wherein a respective coaxial feeder cable 38 connects each NT 28 to the HFC network 40. As will be apparent to those skilled in the art, the HFC distribution network 40 may take several alternate physical forms. By way of example, "downstream" ATM cell traffic transmitted from the switch 26 to one or more NTs 28 may initially be multiplexed for transport over a shared high speed optical fiber (not shown), then de-multiplexed for local distribution over a shared coaxial cable (also not shown). In alternate preferred embodiments, a pure optical or coaxial network may be equally employed.

An exemplary preferred NT 28 is shown and described in U.S. Patent No. 5,805,591, entitled, "Subscriber Network Interface And Method." In accordance with that disclosure, ATM cell-mux circuitry (not shown) in the respective NTs 28 provide for de-multiplexing and routing of incoming (i.e., downstream) ATM cells, and for collecting and multiplexing of outgoing (i.e., "upstream") ATM cells, respectively, wherein the incoming and outgoing ATM cells are routed to and from a plurality of "ATM" subscriber service modules (also not shown) within the NT 28.

The respective subscriber service modules each support individual services, including (at least) telecommunications 30 (e.g., POTS and/or ISDN), set-top telemetry 32 (e.g., for CATV video-on-demand), CEBus network 34 (e.g., for connecting utility managed appliances) and ethernet 36. In particular, an ethernet service module 29 in each NT 28 connects one or more MAC devices (e.g., personal computers, printers, fax machines, etc.) in the respective residence 21 or business location 22 as a respective local area network ("LAN") segment (36).

Each service module "disassembles" the respective incoming cells routed to it by the ATM cell-mux circuitry, adapting the data contained therein into an appropriate service protocol for delivery through a subscriber-side I/O port (not shown) associated with the respective service module. The protocol conversion may include, for example, circuit emulation for providing a synchronous digital data stream, depending on the respective service.

Conversely, information in upstream signals received through a subscriber-side I/O port is assembled into sequential cells by the respective service module and delivered to the ATM cell-mux circuitry. In this manner, the ATM transmission of combined services over the network 20 side is advantageously transparent at the subscriber-side (21/22) I/O ports of the respective NT 28.

As described in greater detail below, the destination MAC address of packets received by an NT 28 over a respective ethernet segment 36 is analyzed by the ethernet service module 29 in the NT 28 to determine if the packet is destined for another device on the respective local LAN segment 36, or is destined for a remote device, such as, e.g., a remote ethernet LAN segment 42 or 44 connected to the WAN 24. In particular, in accordance with standard MAC ethernet protocols, each ethernet data packet includes a header field that contains both source and destination MAC addresses -- i.e., a unique six byte MAC ("media access control") address assigned by the manufacturer of the respective device --, wherein the source and destination MAC addresses are used to indicate the respective transmitting and intended destination devices of the packet.

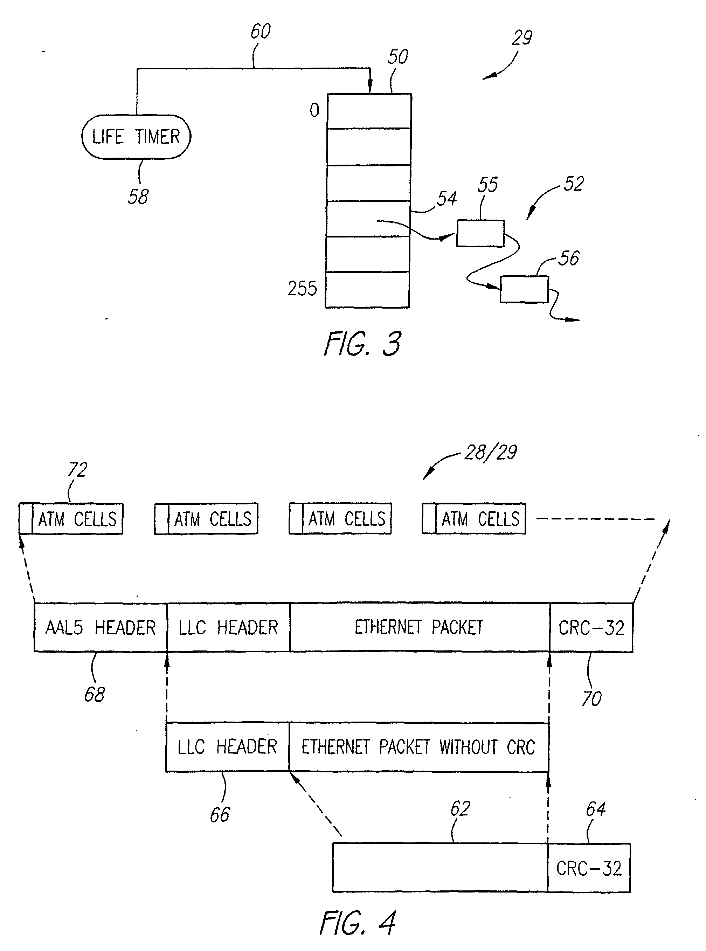

Referring to FIG. **2**, in accordance with a further aspect of the invention, the ethernet service module 29 reads every outgoing packet received on the respective ethernet segment 36, first checking the appended ethernet CRC data (shown in FIG. **4** with reference number 64) to insure integrity of the packet. If the packet is not corrupted or otherwise misaligned, the ethernet module 29 then uses the last byte 46 of the MAC destination address 48 of the packet header to index into a hash table 50 with a linked list 52 containing the remaining five bytes of any devices located on the subscriber side ethernet LAN segment 36 whose respective MAC addresses are presently stored in the hash table/linked list 50/52. Since only the last byte 46 of the respective destination MAC address is used for the look-up, a relatively small hash table 50 of two-hundred fifty-five entries (i.e., 2⁸ -1) is used to index into the remaining five bytes of the respective stored MAC addresses.

In particular, a pointer leads from the associated value 54 in the hash table 50 of the last data byte 46 of the respective destination address to a first linked memory space 55 corresponding to that value. If there are no stored addresses in the first linked memory space 55, there are no further pointers (i.e., or they point to "null") and the packet is forwarded. If there is an address stored in the first space 55 -- i.e., representing the first five bytes of a corresponding respective local segment MAC address, it is compared to the first five bytes of the present destination address 48 and, if there is a match, the packet is dropped.

If there is not a match, a further pointer will link to a second memory space 56. Again, if there is no address stored in the second memory space 56, then there are no further pointers (or they point to null) and the packet is forwarded. If there is a further address stored (i.e., representing the first five bytes of the MAC address of a second device having the same common last MAC address byte as the stored address in the first memory space 55), a comparison will again be made. This process will continue until either a matched address causes the packet to be dropped, or there are no further stored addresses linked to the respective value 54 of the last byte 46, and the packet is forwarded. Thus, the probability of quickly searching and resolving whether the destination MAC address corresponds to a resident device on the respective subscriber ethernet segment 36 is high.

In other words, each index value of the hash table 50 has an associated linked list 52 containing at any time "n" stored addresses, where n is some integer value from zero up to the number of devices on the local ethernet segment 36.

Regardless of whether the destination address search resulted in a match, the ethernet service module 29 then checks the source address of the respective packet using the same algorithm. If it does not already exist in the linked list 52, it is added. In this manner, the ethernet service module 29 keeps growing its internal database corresponding to the presence and activities of devices on the subscriber ethernet segment 36.

Referring to FIG. **3**, a variable timer tick 58 is employed to track of the longevity (i.e., "shelf life") of MAC addresses stored in the linked list 52, and to ensure that only recently active addresses are stored. In particular, each time a MAC address shows up in a source address field, its "shelf life" allotment is fully reset to a selected maximum value (i.e., a maximum number of "ticks"). The timer tick 58 is set at a regular interval for traversing the linked list 52 (indicated in FIG. **3** by line 60), decrementing the remaining time ticks each of the respective stored MAC addresses has left and, at the same time, deleting those addresses whose life time has expired.

In a presently preferred embodiment, the shelf life of a stored address is preferably no more than two days, with the timer tick interval 58 selected within a range of anywhere from one second to an hour. As will be appreciated by those skilled in the art, that an advantage of the present invention is that memory space in the linked list 52 is thus only used on an "as needed" basis, i.e., when a further linked address is made to a common last byte.

Referring to FIG. **4**, if a respective ethernet packet 62 is not dropped due to corrupt data, or based on a matching destination MAC address in the linked list 52, then a logical link control header ("LLC") is added by the ethernet service module 29 to the front of the packet, i.e., with the ethernet CRC data 64 portion of the packet stripped off for evaluation by the ethernet service module 29. The packet 62 is then adapted for ATM transmission by adding an AAL-5 layer header, along with new appended CRC data 70 appended, and the newly formed ATM cell 72 is then inserted into the upstream ATM cell transmission stream from the respective NT 28.

As will be apparent to those skilled in the art, incoming (i.e., downstream) packets are handled much in the same way as the outgoing packets 62, albeit in the reverse order -- i.e., the AAL-5 and LLC headers are removed and ethernet CRC-32 data is appended to the packet before it is forwarded onto the respective ethernet segment 36.

Thus, embodiments and applications of a preferred network interface including an adaptive bridge for filtering out local traffic from that destined for remote ethernets located over an ATM-based broadband access network have been shown and described. As would be apparent to those skilled in the art, many modifications and applications are possible without departing from the inventive concepts herein.

By way of non-limiting examples, the afore-described fast algorithm filtering techniques could be equally employed to filter incoming traffic as well as outgoing traffic. Also, the teachings of the invention may be employed to any number of address formats, i.e., in addition to the disclosed six byte MAC address format. Further, while the disclosed preferred embodiment employs the last byte of the MAC address to index the hash table and associated linked-lists, other selected portions of the address field (e.g., the first byte, or the fourth byte, etc.) could be equally employed for use as an index value to a remaining portion of an address, as taught by the present invention. Still further, the advantageous fast filtering algorithm taught by the present invention may be employed to selectively identify and filter messages based on any number of identifying factors, e.g., on a matching virtual LAN designation.

Further still, while the above-described preferred embodiment of the invention is implemented as part of a network interface (i.e., NT 28) between a local ethernet segment and an ATM-based wide area network, as will be apparent to those skilled in the art, the advantageous fast packet filtering algorithm taught by the present invention may be implemented in any of a number of bridge devices, and between any number of like or different LAN segment types. Still further, while the respective network interface (NT) devices are shown and described in context of supporting a single ethernet service module, it is well-within the skill in the art to implement a network interface that selectively forwards messages from multiple ethernets to onto one or more ATM-based wide area networks, e.g., with separate adaptive bridge tables for each ethernet segment.

Thus, the scope of the disclosed inventions is not to be restricted except by the appended claims.

## Claims

1. A method for selectively forwarding messages from a first network to a second network, each message having an associated destination address, wherein messages transmitted from the first network having a destination address also located on the first network are not forwarded to the second network, the method **characterized by** comprising the steps of:
using a first portion (46) of the destination address (48) of a message transmitted from the first network (22) to index a hash table (50) containing a list of entries corresponding to possible values of the first destination address portion, and locate a respective value (54) matching the first destination address portion;
comparing a second portion of the destination address (48) to each entry (55,56) of a respective linked list (52) of one or more entries associated with the matched hash table value (54) until a respective linked list entry (55,56) is found to match the second destination address portion, or until there are no further entries in the respective linked list (52); and
transmitting the respective message from the first network to the second network only if there is no entry (55,56) in the respective linked list (52) matching the second destination address portion,
wherein the second destination address portion comprises the entire destination address (48) not contained in the first portion (48).

2. The method of claim 1, wherein the first destination address portion (46) consists of a contiguous 8-bit byte of the destination address (48).

3. The method of claim 2, in which the destination address (43) is a six byte MAC address, the first portion (46) being the last byte, and the second portion being the first five bytes, respectively, of the MAC address.

4. The method of claim 1, comprising the further step of:
encapsulating a respective message transmitted from the first network to the second network in an ATM transmission format comprising an LLC header field (66) and an AAL5 header field (68).

5. The method of claim 1, comprising the further step of:
storing a second portion of a source address of a message transmitted from the first network as a new entry of a respective linked list (52) associated with a hash table value (54) matching a first portion of the respective source address.

6. The method of claim 5, further comprising the step of:
deleting a respective entry of a linked list (52) if no message transmitted from the first network has a source address having a second portion matching the respective entry within a predefined time interval.

## Patentansprüche

1. Verfahren für das selektive Weiterleiten von Meldungen von einem ersten Netzwerk zu einem zweiten Netzwerk derart, dass jede Meldung eine zugewiesene Zieladresse aufweist, wobei Meldungen, die von dem ersten Netzwerk mit einer Zieladresse übertragen werden, die ebenso in dem ersten Netzwerk lokalisiert ist, nicht zu dem zweiten Netzwerk weitergeleitet werden, wobei das Verfahren **dadurch gekennzeichnet ist, dass** es die folgenden Schritte enthält:
Anwenden eines ersten Abschnitts (46) der Zieladresse (48) einer Meldung, übertragen von dem ersten Netzwerk (22), zum Indizieren einer Hash-Tabelle (50) mit einer Liste von Einträgen gemäß den möglichen Werten des ersten Zieladressabschnitts, und Lokalisieren eines jeweiligen Werts (54), der mit dem ersten Zieladressabschnitts abgestimmt ist;
Vergleichen eines zweiten Abschnitts in der Zieladresse (48) mit jedem Eintrag (55, 56) einer jeweiligen verketteten Liste (52) eines oder mehrere Einträge in Zuordnung zu dem abgestimmten Hash-Tabellenwert (54) bis ein jeweiliger Eintrag in der verketteten Liste (55, 56) in Abstimmung zu dem zweiten Zieladressenabschnitt gefunden ist, oder bis keine weiteren Einträge in der jeweiligen verketteten Liste (52) vorliegen; und
Übertragen der jeweiligen Meldung von dem ersten Netzwerk zu dem zweiten Netzwerk lediglich dann, wenn es keinen Eintrag (55, 56) in der jeweiligen verketteten Liste (52) in Abstimmung zu dem zweiten Zieladressabschnitt gibt, wobei
der zweite Zieladressabschnitt die gesamte Zieladresse (48) enthält, die nicht in dem ersten Abschnitt (48) enthalten ist.

2. Verfahren nach Anspruch 1, wobei der erste Zieladressabschnitt (46) aus einem angrenzenden 8-Bit Byte der Zieladresse (48) besteht.

3. Verfahren nach Anspruch 2, in dem die Zieladresse (48) eine 6-Byte MAC Adresse ist, wobei der erste Abschnitt (46) das letzte Byte ist, und der Abschnitt jeweils das erste bis fünfte Byte der MAC Adresse ist.

4. Verfahren nach Anspruch 1, enthaltend den weiteren Schritt:
Einkapseln einer jeweiligen von dem ersten Netzwerk zu dem zweiten Netzwerk übertragenen Meldung in ein ATM übertragen Format mit einem LLC Header-Feld (66)und einem AAL5 Header-Feld (68).

5. Verfahren nach Anspruch 1, enthaltend den weiteren Schritt:
Speichern eines zweiten Abschnitts einer Quelladresse einer Meldung, übertragen von dem ersten Netzwerk, als neuen Eintrag einer jeweiligen verketteten Liste (52) in Zuordnung zu einem Hash-Tabellenwert (54) in Abstimmung zu einem ersten Abschnitt der jeweiligen Quelladresse.

6. Verfahren nach Anspruch 5, ferner enthaltend den Schritt:
Löschen eines jeweiligen Eintrags einer verketteten Liste (52), wenn keine von dem ersten Netzwerk übertragene Meldung eine Quelladresse mit einem zweiten Abschnitt in Abstimmung zu dem jeweiligen Eintrag in einem vordefinierten Zeitintervall hat.

## Revendications

1. Procédé d'acheminement sélectif de messages d'un premier réseau à un second réseau, chaque message comportant une adresse de destination associée, dans lequel les messages émis du premier réseau ayant une adresse de destination située aussi dans le premier réseau ne sont pas acheminés au second réseau, le procédé étant **caractérisé en ce qu'**il comprend les étapes :
d'utilisation d'une première partie (46) de l'adresse (48) de destination d'un message émis du premier réseau (22) pour indexer une table (50) de hachage contenant une liste d'entrées correspondant à des valeurs possibles de la première partie d'adresse de destination, et de localisation d'une valeur respective (54) qui concorde avec la première partie d'adresse de destination ;
de comparaison d'une seconde partie de l'adresse (48) de destination avec chaque entrée (55, 56) d'une liste chaînée respective (52) d'une ou plusieurs entrées associées à la valeur (54) de table de hachage qui concordait, jusqu'à ce que l'on trouve une entrée (55, 56) de la liste chaînée respective qui concorde avec la seconde partie d'adresse de destination, ou jusqu'à ce qu'il n'y ait plus d'entrée dans la liste chaînée respective (52) ; et
d'émission du message respectif du premier réseau vers le second réseau seulement s'il n'y a pas d'entrée (55, 56) dans la liste chaînée respective (52) qui concorde avec la seconde partie d'adresse de destination ;
dans lequel la seconde partie d'adresse de destination comprend toute l'adresse (48) de destination non contenue dans la première partie (48).

2. Procédé selon la revendication 1, dans lequel la première partie (46) d'adresse de destination est constituée d'un octet de 8 bits contigus de l'adresse (48) de destination.

3. Procédé selon la revendication 2, dans lequel l'adresse (43) de destination est une adresse de MAC à six octets, la première partie (46) étant le dernier octet, et la seconde partie étant les cinq premiers octets, respectivement, de l'adresse de MAC.

4. Procédé selon la revendication 1, comprenant l'étape supplémentaire :
d'encapsulation d'un message respectif émis du premier réseau vers le second réseau dans un format d'émission d'ATM comprenant une zone d'en-tête (66) de LLC et une zone d'en-tête (68) d'AAL5.

5. Procédé selon la revendication 1, comprenant l'étape supplémentaire :
de mémorisation d'une seconde partie d'une adresse de source d'un message émis du premier réseau en tant que nouvelle entrée d'une liste chaînée respective (52) associée à une valeur (54) de table de hachage qui concorde avec une première partie de l'adresse de source respective.

6. Procédé selon la revendication 5, comprenant en outre l'étape :
de suppression d'une entrée respective d'une liste chaînée (52) si aucun message émis du premier réseau ne possède une adresse de source ayant une seconde partie qui concorde avec l'entrée respective à l'intérieur d'un intervalle de temps prédéfini.
